# EUROPEAN PATENT APPLICATION

(11) **EP 0 844 333 A1**
(43) Date of publication of application: **27.05.1998**
(21) Application number: 97309400.6
(22) Date of filing: 21.11.1997
(51) Int. Cl.: E01C 23/22, B62B 3/00

(54) **Line striping cart**

(30) Priority: 22.11.1996 US 31676 P
(71) Applicant: GRACO INC., Minneapolis, Minnesota 55434 (US)
(72) Inventor: Lanerd, Lawrence L., Corcoran, Minnesota 55340 (US)
(74) Representative: Sturt, Clifford Mark

(57) **Abstract**

A manually pushable line stripping apparatus is designed to have a first main axle and a second front axle parallel to the main axle with one wheel on it. Both of the first two axles are fixed allowing the unit to be pushed in a straight line without any adjustment. During manufacture, a mechanism is provided to produce a finished striper with perfect straight line alignment in spite of variations which may take place during the welding and production process by providing a fixture which allows the axles to be produced in absolute alignment of each other. The third axle is mounted to the rear of the frame or the handle which mounts a swivelable caster such that when the operator pushes down the handle, the unit then rides on the caster and the first axle thereby allowing the unit to be turned, maneuvered or otherwise swiveled because the front wheel has been lifted from the ground.

## Description

### BACKGROUND OF THE INVENTION

Manual line stripers have become increasingly popular in recent years for light duty striping projects such as parking lots In most cases, such products involve a caster wheel which may be locked or unlocked such that when the caster is locked, the unit is designed to be pushed in a straight line and when the caster is unlocked the unit may be maneuvered or to produce striping around curves. Such units have typically proven to be sensitive to abuse and also require more expensive parts (thereby increasing the cost of the unit).

### SUMMARY OF THE INVENTION

It is therefore an object of this invention to provide a device which may be easily and inexpensively manufactured and yet which produces excellent performance when pushed in a straight line which is in fact straight and which also is capable of easily being maneuvered to either stripe around turns or to maneuver between striping sections.

Toward this end, a generally rectangular frame is provided for the striper and a main or first axle is provided having a wheel at either side of the frame. A second axle is provided at the front of the unit with a wheel thereon. During assembly, an axle is mounted through two front axle locating cams located on either side of where the wheel will be mounted and that axle is fitted into a jig which places the assembly axle in perfect parallel alignment with the main axle. Once that alignment has been obtained, holes are drilled in the front forks to permanently mount the front axle thereby providing permanent parallel alignment.

A rear caster is slideably mounted on the handle of the unit such that when the operator presses down on the handle, the swivelable caster is placed in contact with the ground and the front wheel lifted off of the ground. The rear wheel maybe positioned along the handle to vary the amount of tilt allowed when the handle is pushed downwardly.

The spray gun may be either mounted to extend off the front of the side and toward the front of the striping unit or to extend such that the outlet of the gun is coincident with the main axle so that when the unit is tipped up onto the rear caster the distance from the gun to the ground remains constant thereby allowing stripe width to remain constant.

Alternatively, when the gun extends forwardly this can be used to produce two different line widths such that a narrower width is produced when the front wheel is on the ground and a wider stripe is produced when the unit is tilted up onto the rear caster. In the preferred embodiment, the force required to tilt the unit upwardly is approximately 16 pounds, however this is easily the subject of design and operator choice. The paint bucket itself should be centered over the main axle so that when the bucket is full or empty has little affect on the tiltability of the striper.

The frame is also produced which has a single main beam which directly connects the handle through the center of the device to provide an integrated or monocoque chassis having a high degree of rigidity. By making this structure a welded versus a bolted structure, durability and stability is further enhanced.

These and other objects and advantages of the invention will appear more fully from the following description made in conjunction with the accompanying drawings wherein like reference characters refer to the same or similar parts throughout the several views.

### A BRIEF DESCRIPTION OF THE DRAWINGS

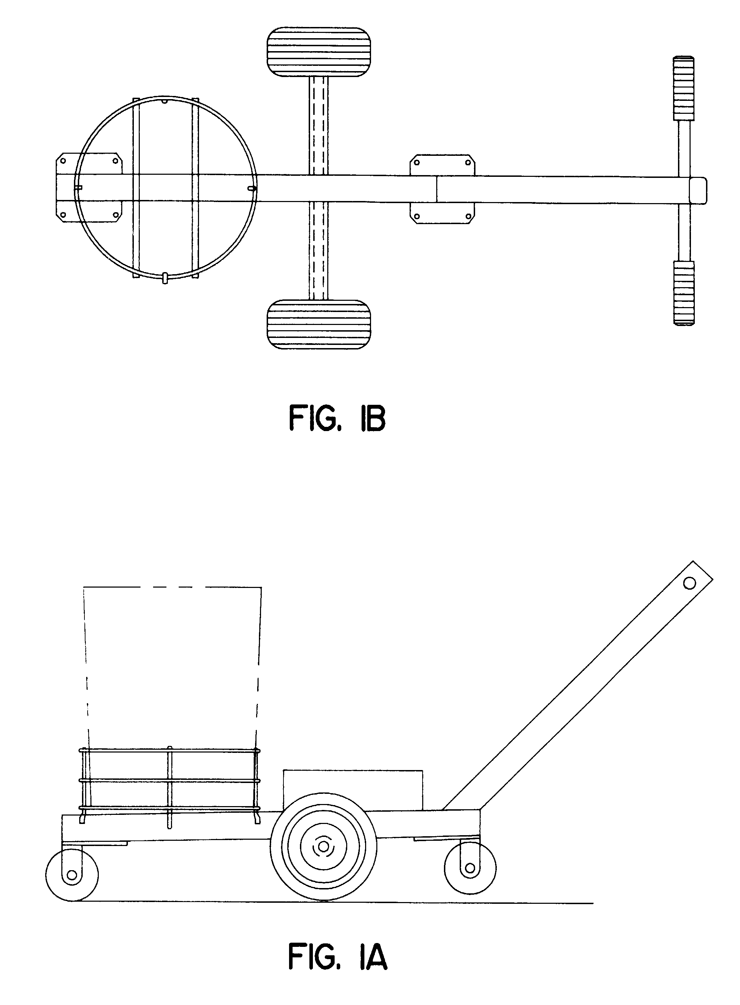

Figure 1a is a side plan view of the frame of the striper of the instant invention.

Figure 1b is atop plan view of the frame of the striper of the instant invention.

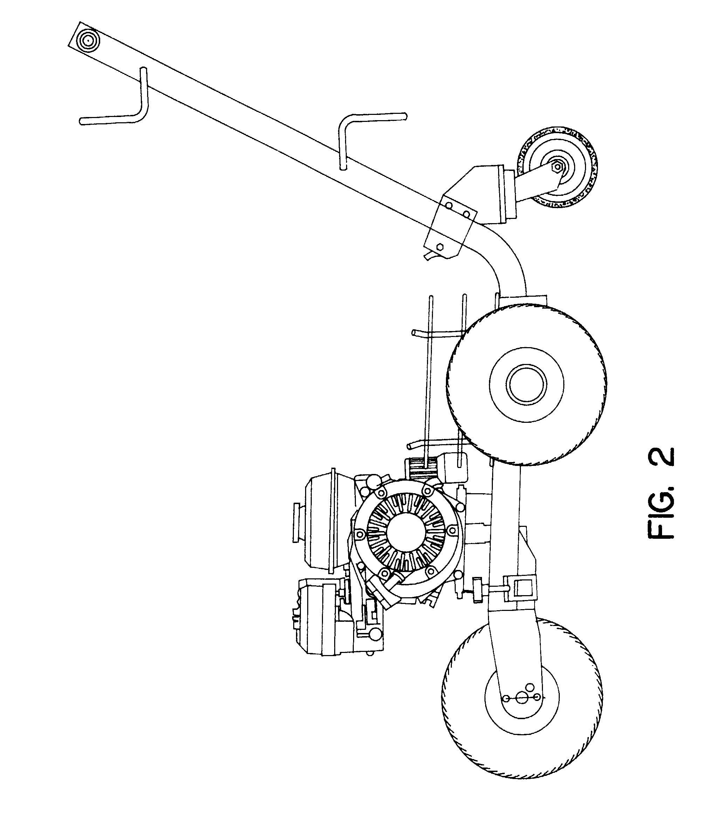

Figure 2 is a side plan view of the striper of the instant invention in the normal straight line mode.

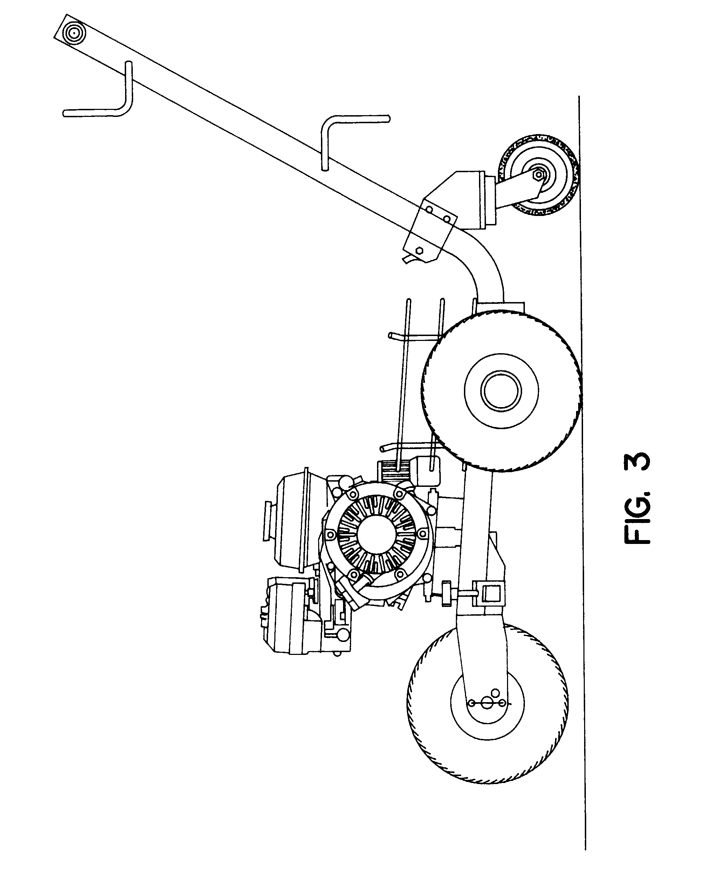

Figure 3 is a side plan view of the striper of the instant invention in the tilt/curved line mode.

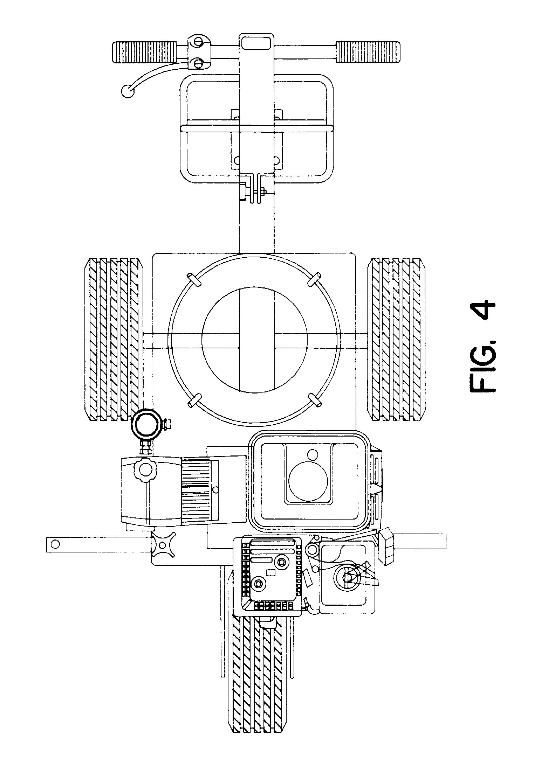

Figure 4 is a top plan view of the striper of the instant invention.

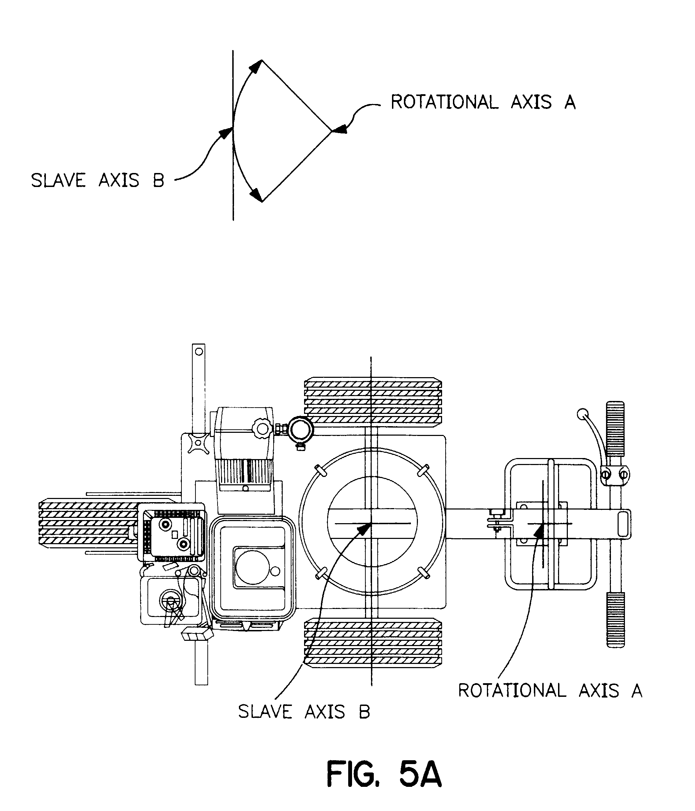

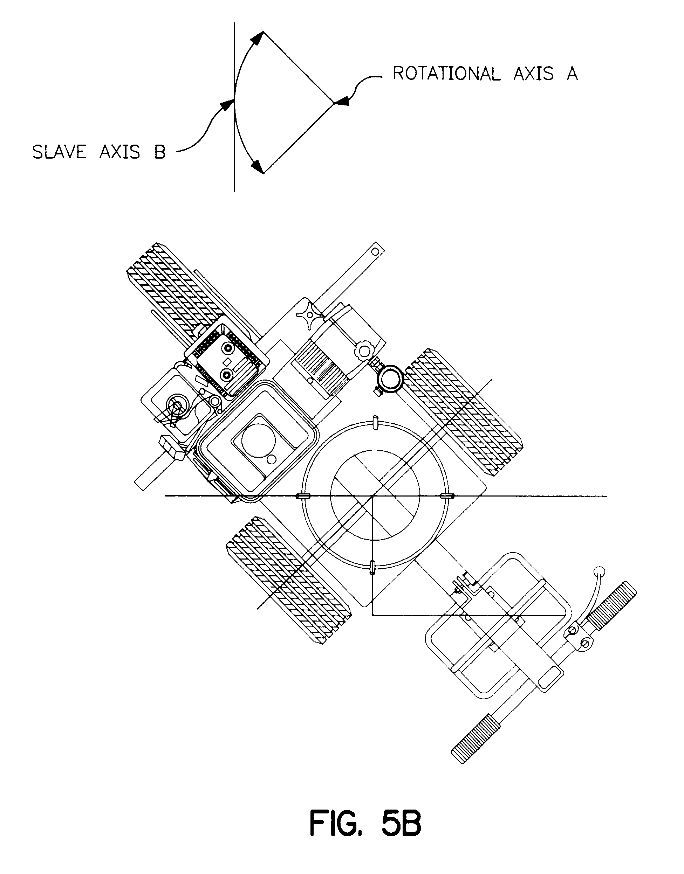

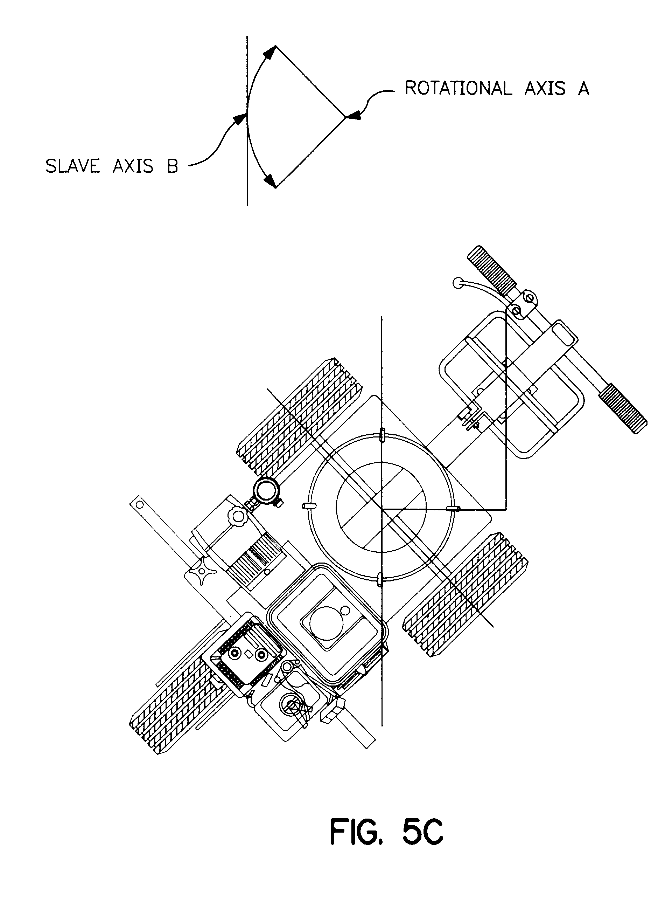

Figures 5a-c are top plan views of the striper of the instant invention in the tilt position

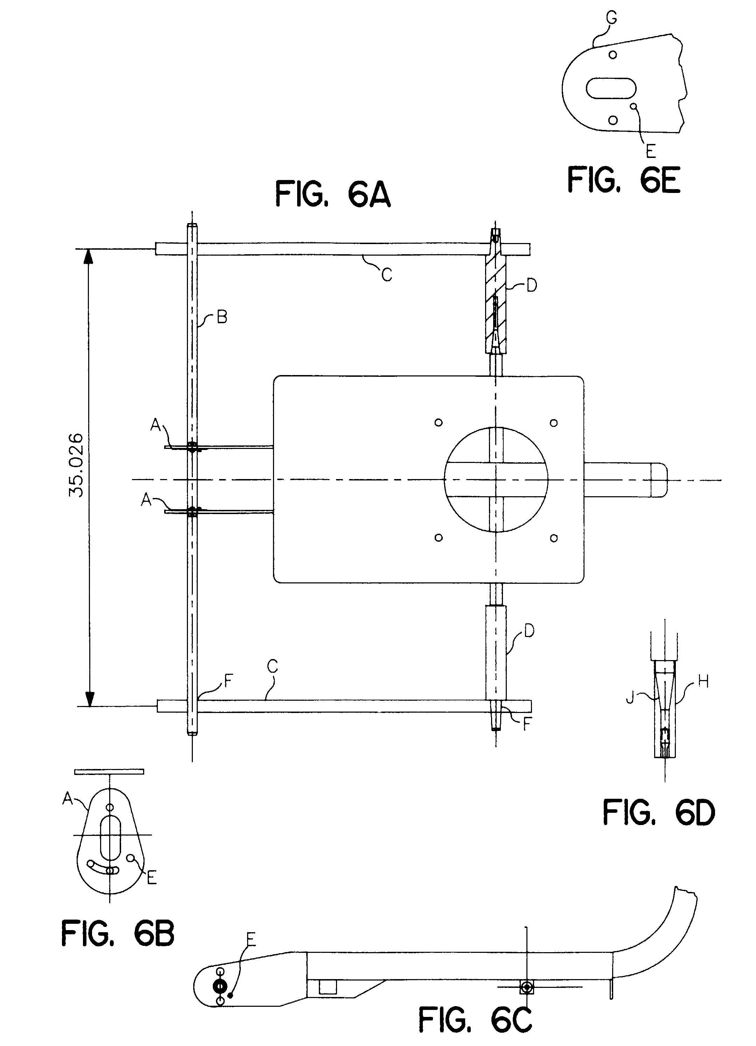

Figures 6a-e are detail views of the frame and components of the striper of the instant invention.

### DESCRIPTION OF THE PREFERRED EMBODIMENT

While item A is shown as a front axle locating cam, other cam varieties may be used, however the design shown is probably one of the more simplistic and therefore inexpensive designs which could be used.

Item B is the front axle locating fixture and is formed of a polished and ground shaft having bullet nosed ends and is inserted after alignment fixtures F are in place.

Item C is the assembly alignment fixture which is a jigged board aluminum rectangle.

Item D is the assembly rear shaft locator tool and has an inside locking taper for near perfect centering.

Item E is the feature which line drills using the front forks as a drill bushing after the cam mechanism is securely bolted.

Item F may be replacable bushings and Item G shows more front fork detail. Item F shows actual hub design installed after the assembly tools Dare removed and detail J shows the locking taper which is used to provide concentricity from alignment tool D to final design axle stub H.

By projecting the axles outwardly this allows extremely close angular tolerances between the rear axle and the front axle based on calculations with realistic manufacturing tolerances. This alignment method can produce accuracies of less than .006 degrees. Accordingly, this unit is capable of painting a 20 foot line within .027 inches subject to entire imperfections.

It is contemplated that various changes and modifications may be made to the line striper without departing from the spirit and scope of the invention as defined by the following claims.

## Claims

1. In a line striping apparatus mounted on a wheeled cart having a handle and a spray gun, the improvement comprising:
a first axle having at least two wheels mounted thereon;
a second axle parallel to said first axle and having at least one wheel thereon; and
a third swivelable axle non-coplanar with said first and second axles and having at least one wheel mounted thereon, said first axle being located between said second and third axles.

2. The line striping apparatus of claim 1 wherein said spray gun comprises an outlet, said spray gun outlet being coincident with said first axle.

3. The line striping apparatus of claim 1 further comprising a handle and wherein the weight distribution of said apparatus is such that said apparatus normally rolls on the wheels on said first and second axles and that by pushing down on said handle, said second axle wheel is removed from rolling contact and said third swivelable axle wheel is placed into rolling contact so that said apparatus may be turned.

4. The line striping apparatus of claim 1 wherein said third axle is manually repositionable so as to allow variance of the angle required to engage said third axle wheel.
